## Europäisches Patentamt

## European Patent Office

## Office européen des brevets

(11) Veröffentlichungsnummer: **0 237 476**
**B1**

(12) **EUROPÄISCHE PATENTSCHRIFT**

(45) Veröffentlichungstag der Patentschrift:
**03.01.90**

(51) Int. Cl.⁴: **F16B 15/08**

(21) Anmeldenummer: **87810092.4**

(22) Anmeldetag: **16.02.87**

(54) **Nagelstreifen.**

(30) Priorität: **03.03.86 DE 3606901**

(43) Veröffentlichungstag der Anmeldung:
**16.09.87 Patentblatt 87/38**

(45) Bekanntmachung des Hinweises auf die Patenterteilung:
**03.01.90 Patentblatt 90/1**

(84) Benannte Vertragsstaaten:
**AT BE CH DE ES FR GB IT LI NL SE**

(56) Entgegenhaltungen:
**DE-A- 1 603 978**
**DE-A- 2 810 069**
**DE-A- 3 312 674**
**DE-U- 7 032 234**
**FR-A- 2 335 722**
**GB-A- 1 080 538**

(73) Patentinhaber: **HILTI Aktiengesellschaft,**
**FL-9494 Schaan(LI)**

(72) Erfinder: **Steffen, Markus, Laufenbrunnenweg 1,**
**CH-9472 Grabs(CH)**
Erfinder: **Von Flue, Peter, Seeblickstrasse 23,**
**CH-9113 Degersheim(CH)**

(74) Vertreter: **Wildi, Roland, Hilti Aktiengesellschaft**
**Patentabteilung, FL-9494 Schaan(LI)**

**Beschreibung**

Die Erfindung betrifft einen Nagelstreifen mit gegenseitig über durchtrennbare Verbindungsmittel in paralleler Anordnung zusammengehaltenen Nägeln, wobei die Nägel in Führungsbüchsen mit in Axialprojektion der Nägel kreisrunden Führungsbereichen gehalten sind und die Führungsbüchsen über die, die Führungsbereiche in ihrer Axialprojektion radial überragenden Verbindungsmittel miteinander verbunden sind.

Nagelstreifen finden in Kolben-Setzgeräten Verwendung und bieten gegenüber dem Zuführen vereinzelter nicht miteinander verbundener Nägel erhebliche Vorteile, wie automatisierbare Zuführung und damit rascherer Setzzyklus sowie weitgehende Vermeidung des Verlierens von Nägeln.

Ein bekannter Nagelstreifen (DE-A 2 810 069) besteht aus einstückig aus Blech geformten Nägeln mit Schaft und Kopf, wobei die Köpfe der jeweils einander benachbarten Nägel über durchtrennbare Verbindungsmittel zusammengehalten sind. Die Verbindungsmittel sind durch von den Köpfen ausgehende schmale Blechstreifen gebildet, die beim Vorlaufen des Kolbens mittig zwischen den Köpfen durchtrennt werden. Die auf diese Weise vereinzelten Nägel werden vom Kolben in der Mündungsbohrung gegen einen Untergrund getrieben.

Die Verbindungsmittel haben nicht nur die Aufgabe, die Nägel zu einem Streifen zusammenzuhalten, sondern sollen auch eine parallele Ausrichtung der Schäfte zueinander sicherstellen. Diese parallele Ausrichtung der Schäfte ist aufgrund der leichten Verbiegbarkeit der Verbindungsmittel nicht gewährleistet. Zudem ist eine vollständige Verwertung des Nagelstreifen nicht möglich, da zumindest der letztgereihte Nagel des Nagelstreifens in undefinierter Lage in die Mündungsbohrung gelangen kann. Aus diesem Grunde muss meistens auf die Verwertung der letzten drei bis fünf Nägel verzichtet werden, da dieser kurze Restabschnitt des Nagelstreifens im Radialkanal keine ausreichende Führung findet.

Die Hälften der durchtrennten Verbindungsmittel überragen die Axialprojektion des jeweils in die Mündungsbohrung gelangten Nagels in Vorschubrichtung des Nagelstreifens. Zur Erzielung einer für den Durchtrennungsvorgang vorteilhaften axialen Abstützung ragt dieser Teil des Verbindungsmittels in eine gegenüberliegend zum Radialkanal radial in die Wandung der Mündungsbohrung eingelassene Aufnahmeöffnung ein.

Bei einem weiteren bekannten Nagelstreifen (DE-A 1 603 978) sind die Nägel durch Bänder aus zwei zusammengeklebten Streifen im Abstand zueinander gehalten. Bei beginnendem Eintreibvorgang werden die Bänder durchtrennt so dass die Nägel beim Eintreibvorgang in unzureichender Weise nur einseitig durch den Nagelkopf geräteseitig geführt sind, was die Qualität der Befestigung beeinträchtigen kann. Zumindest der letzte Nagel des Nagelstreifens kommt zufolge der einseitigen Abstützung durch den Nagelkopf nicht achsparallel in die Mündungsbohrung zu liegen, so dass dieser keinesfalls ordnungsgemäss eingetrieben werden kann.

Bei einem ferner bekannten Nagelstreifen (FR-A 2 335 722) sind die Nägel in Führungsbüchsen im Abstand zueinander gehaltert. Die teilweise eine zylindrische Mantelkontur aufweisenden Führungsbüchsen liegen mit den Mantelkonturen direkt aneinander und sind über durchtrennbare Stege miteinander verbunden. Diese bekannten Führungsbüchsen gewährleisten aufgrund der nur teilweise zylindrischen Mantelkontur keine ausreichende Führung der Nägel in der Mündungsbohrung des Setzgerätes. Darüber hinaus ist der Durchtrennungsvorgang der Stege zufolge einer fehlenden Abstützungsmöglichkeit der jeweils in die Mündungsbohrung transportierten Führungsbüchse mangelhaft.

Der Erfindung liegt die Aufgabe zugrunde, einen Nagelstreifen zu schaffen, der eine zuverlässige achsparallele Führung der Nägel in der Mündungsbohrung eines Setzgerätes gewährleistet und ein Verwerten aller Nägel im Setzgerät erlaubt.

Erfindungsgemäss wird die Aufgabe dadurch gelöst, dass die Führungsbereiche durch in beiden axialen Endzonen der Führungsbüchsen vorgesehene Ringflächen gebildet sind, deren Durchmesser den Durchmesser des zwischen den Ringflächen liegenden Abschnittes der Führungsbüchsen sowie des Kopfes der Nägel übersteigt.

Die kreisrunden Führungsbereiche der Führungsbüchsen entsprechen dem Querschnitt der Mündungsbohrung, wodurch eine exakte achsparallele Führung der Nägel im Setzgerät gewährleistet wird. Zweckmässig erstrecken sich die Führungsbereiche bis zu den Enden der Führungsbüchsen, so dass allfällige Ablenkkräfte nur kleine Querbelastungen in den Führungsbereichen bewirken können.

Die Verbindungsmittel werden beim Vorlaufen des Kolbens in Axialprojektion mittig zwischen den kreisrunden Führungsbereichen durchtrennt. Der jeweils in Vorschubrichtung des Nagelstreifens die Axialprojektion der Führungsbereiche des in die Mündung nachgerückten Nagels überragende Teil des zuletzt durchtrennten Verbindungsmittels taucht in die geräteseitige Aufnahmeöffnung ein. Auch der letzte Nagel des Nagelstreifens lässt sich auf diese Weise in der Mündungsbohrung achsparallel ausrichten, wobei über den in die Aufnahmeöffnung eingetauchten Teil des in Vorschubrichtung weisenden Verbindungsmittels dieses Nagels eine formschlüssige und damit sichere axiale Halterung des Nagels im Mündungsteil gewährleistet ist. Erst durch die Kraft des am Nagel auflaufenden Kolbens wird unter teilweiser Zerstörung des eingetauchten Teiles ein Ueberwinden dieser Halteposition erreicht. Zweckmässig sind die Führungsbüchsen und die Verbindungsmittel einstückig aus Kunststoff geformt.

Vorzugsweise sind die Verbindungsmittel als über wenigstens die halbe Länge der Führungsbüchse sich erstreckende Stege ausgebildet. Hinsichtlich günstiger Lastverteilung ist es zweckmässig, die Stege in bezug auf die Länge der Führungsbüchsen mittig anzuordnen. Durch Stege dieser Länge wird eine hohe Verformungssteifigkeit erzielt, so dass der Nagelstreifen hinsichtlich der Beibehaltung der parallelen Anordnung der Nägel zueinander formstabil ist.

Um zu gewährleisten, dass die Stege mittig durchtrennt werden, weisen diese im mittleren Bereich zwischen jeweils zwei einander benachbarten Führungsbüchsen eine Querschnittschwächung, gebildet durch wenigstens an einer der Stirnseiten der Stege vorgesehene V-förmige Aussparung, auf. Die zweckmässig durch an beiden Stirnseiten der Stege angeordnete V-förmige Aussparungen geschaffene Querschnittschwächung trägt aber auch zu einem kraftsparenden Durchtrennen der Stege bei. Die V-förmigen Aussparungen schaffen nach dem Durchtrennen der Stege an den Enden der Teile der Stege Anschrägungen, die das radiale Eintauchen der Teile in die geräteseitige Aufnahmeöffnung erleichtern können.

Gute Führung der Führungsbüchsen in der Mündungsbohrung ist zusammen mit Materialersparnis nach einem weiteren Vorschlag erreichbar, indem die Führungsbereiche durch in beiden axialen Endzonen der Führungsbüchsen vorgesehene Ringflächen mit je dem 0,1- bis 0,3-fachen deren Durchmesser entsprechender Höhe gebildet sind. Der zwischen den Führungsbereichen liegende axiale Abschnitt der Führungsbüchsen kann im Vergleich zu den Führungsbereichen dünnwandig und dadurch materialsparend gestaltet sein. Die Stege erstrecken sich zweckmässig über diesen reduzierten Abschnitt.

Die Erfindung wird nachstehend anhand von Zeichnungen, die ein Ausführungsbeispiel wiedergeben näher erläutert. Es zeigen:

Fig. 1 Einen Rest eines Nagelstreifens in Ansicht;
Fig. 2 einen Schnitt durch den Nagelstreifen nach Fig. 1, gemäss Schnittverlauf II;
Fig. 3 den gegenüber Fig. 2 verkleinerten Nagelstreifen im Verwendungseinsatz, in einem teilweise im Längsschnitt dargestellten Setzgerät;
Fig. 4 die Verwendung des letzten Nagels des Nagelstreifens in dem Setzgerät nach Fig. 3.

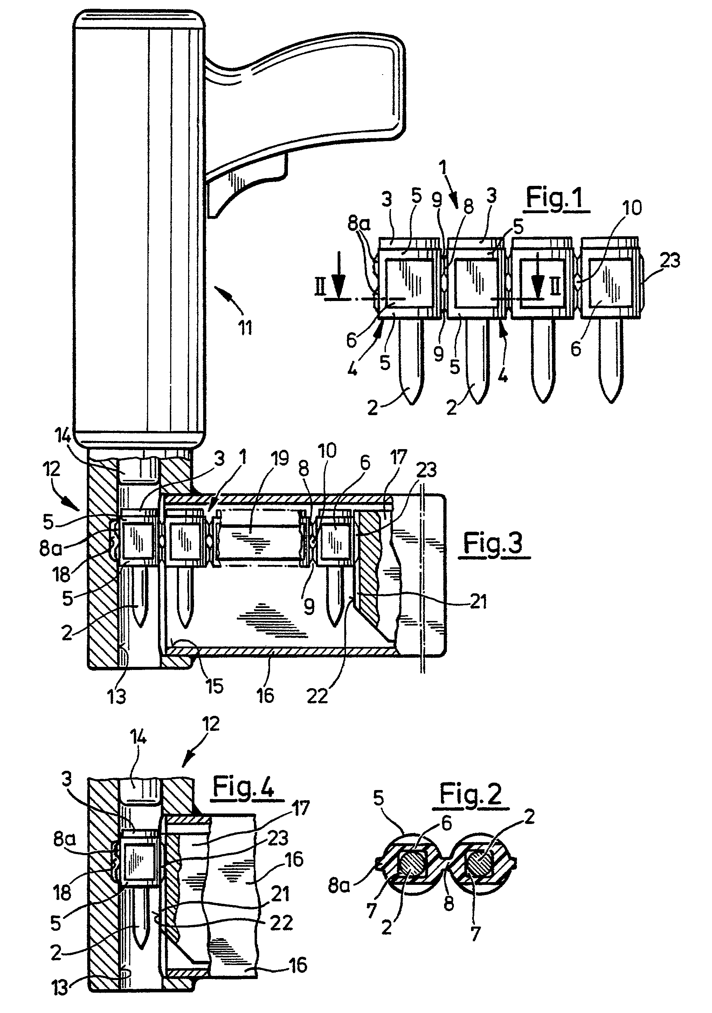

Der in Fig. 1 dargestellte, insgesamt mit 1 bezeichnete Nagelstreifen besteht aus parallel zueinander angeordneten Nägeln mit Schaft 2 und Kopf 3. Den Schaft 2 umgeben kopfnah insgesamt mit 4 bezeichnete Führungsbüchsen aus Kunststoff. An den axialen Endzonen sind an den Führungsbüchsen 4 Führungsbereiche bildende Ringflächen 5 vorgesehen, deren Axialprojektion die Axialprojektion der Köpfe 3 überragt. Der axiale Abschnitt 6 zwischen den Ringflächen 5 ist, wie die Fig. 2 zeigt, gegenüber den die Ringflächen bildenden Endzonen im Querschnitt reduziert. Der Aufnahme des Schaftes 2 in den Führungsbüchsen 4 dient eine Zentralbohrung 7 mit quadratischem Querschnitt.

Die Führungsbüchsen 4 sind miteinander durch Verbindungsmittel in Form eines Steges 8 aus Kunststoff im wesentlichen im Bereich des Abschnittes 6 stoffschlüssig verbunden. V-förmige Aussparungen 9 an den Stirnseiten der Stege 8 schaffen eine Querschnittschwächung der Stege. Aus fertigungstechnischen Gründen sind im Bereich der Stege 8 Durchbrüche 10 vorgesehen.

Die Fig. 3 zeigt ein insgesamt mit 11 bezeichnetes Setzgerät mit einem ingesamt mit 12 bezeichneten Mündungsteil. In eine Mündungsbohrung 13 ragt verschiebbar ein Kolben 14, dessen setzrichtungsseitiger Endabschnitt erkennbar ist. In die Mündungsbohrung 13 tritt ein Radialkanal 15 ein, der im wesentlichen durch ein Hohlprofil 16 gebildet ist. Ein durch Federkraft betätigter Schieber 17 im Hohlprofil 16 dient dem Vorschub eines Nagelstreifens 1 radial zur Mündungsbohrung 13 hin. Der jeweils in die Mündungsbohrung 13 eingeführte Nagel richtet sich achsparallel zur Mündungsbohrung 13 aus, indem sich die Ringflächen 5 der Führungsbüchse 4 an der Wandung der Mündungsbohrung abstützen. Der in Vorschubrichtung des Nagelstreifens 1 die Ringflächen 5 in der Axialprojektion radial überragende Teil 8a eines jeweils zuvor durchtrennten Steges 8 taucht in eine axial begrenzte Aufnahmeöffnung 18 in der Wandung der Mündungsbohrung 13 ein. Der in der Mündungsbohrung 13 befindliche Nagel ist einerseits über diesen Eingriff des Teiles 8a und andererseits durch die Verbindung mit dem restlichen Teil des Nagelstreifens 1, der in Setzrichtung über eine Führungsleiste 19 im Hohlprofil 16 abgestützt ist, in Setzrichtung gehaltert. Die Führungsleiste 19 greift dabei zwischen die Ringflächen 5 in den mit der Aussenkontur radial zurückversetzten Abschnitt 6 der Führungsbüchsen 4 ein. Die Führungsleiste 19 dient als Gegenlager zur Aufnahme der beim Durchtrennungsvorgang auftretenden Kräfte.

Wie die Fig. 4 zeigt, ist auch der letzte Nagel des Nagelstreifens verwertbar. Dieses wird durch Eingriff des Tei les 8a in die Aufnahmeöffnung 18 definiert axial gehalten. Eine Hohlkehle 21 in der vorschubrichtungsseitigen Stirnfläche 22 des Schiebers 17 nimmt einen Vorsprung 23 auf, der im wesentlichen dem Teil 8a entsprechend ausgebildet ist, so dass die vorschubrichtungsseitige Stirnfläche 22 des Schiebers 17 sich führungsgerecht gegen die Ringflächen 5 abstützt. Durch Eingriff des Teiles 8a sowie des Vorsprunges 23 in die Aufnahmeöffnung 18 und die Hohlkehle 21 wird auch ein Verdrehen des Nagels in der Mündungsbohrung 13 verhindert. Die Führungsbüchse 4 läuft beim Eintreiben des Schaftes 2 in einen Untergrund an diesem auf und wird durch die über den Kopf 3 eingeleitete Axialkraft zerstört.

**Patentansprüche**

1. Nagelstreifen (1) mit gegenseitig über durchtrennbare Verbindungsmittel (8) in paralleler Anordnung zusammengehaltenen Nägeln, wobei die Nägel in Führungsbüchsen (4) mit in Axialprojektion der Nägel kreisrunden Führungsbereichen gehalten sind und die Führungsbüchsen (4) über die die Führungsbereiche in ihrer Axialprojektion radial überragenden Verbindungsmittel (8) miteinander verbunden sind, dadurch gekennzeichnet, dass die Führungsbereiche durch in beiden axialen Endzonen der Führungsbüchsen (4) vorgesehene Ringflächen (5) gebildet sind, deren Durchmesser den Durchmesser des zwischen den Ringflächen liegen-

den Abschnittes der Führungsbüchsen (4) sowie des Kopfes (3) der Nägel übersteigt.

2. Nagelstreifen nach Anspruch 1, dadurch gekennzeichnet, dass die Verbindungsmittel als über wenigstens die halbe Länge der Führungsbüchsen (4) sich erstreckende Stege (8) ausgebildet sind.

3. Nagelsteifen nach Anspruch 2, dadurch gekennzeichnet, dass die Stege (8) im mittleren Bereich zwischen jeweils zwei einander benachbarten Führungsbüchsen (4) eine Querschnittsschwächung, gebildet durch wenigstens an einer der Stirnseiten der Stege (8) vorgesehene V-förmige Aussparung (9), aufweisen.

4. Nagelstreifen nach einem der Ansprüche 1 bis 3, dadurch gekennzeichnet, dass die Ringflächen (5) je eine dem 0,1- bis 0,3-fachen deren Durchmessers entsprechende Höhe aufweisen.

## Claims

1. A nail strip (1) having nails which are held together in parallel arrangement mutually by way of severable connecting means (8), in which respect the nails are held in guide bushes (4) having guidance regions which are circular in axial projection of the nails and the guide bushes (4) are connected together by way of the connecting means (8) projecting radially beyond the guidance regions in their axial direction, characterised in that the guidance regions are formed by annular surfaces (5) which are provided in both axial end zones of the guide bushes (4) and the diameter of which exceeds the diameter of the portion, lying between the annular surfaces, of the guide bushes (4) as well as of the head (3) of the nails.

2. A nail strip according to claim 1, characterised in that the connecting means are designed as webs (8) extending over at least half the length of the guide bushes (4).

3. A nail strip according to claim 2, characterised in that the webs (8) have in the central region between in each case two mutually adjacent guide bushes (4) a cross-sectional weakening, formed by a V-shaped recess (9) provided at least on one of the end faces of the webs (8).

4. A nail strip according to any one of claims 1 to 3, characterised in that the annular surfaces (5) each have a height corresponding to 0.1 up to 0.3 times the diameter thereof.

## Revendications

1. Bande de clous (1) avec des clous maintenus ensemble dans une disposition parallèle par l'intermédiaire d'éléments de liaison (8) sectionnables, les clous étant fixés dans des douilles de guidage (4) qui, dans la projection axiale des clous comprennent des zones de guidage circulaires et les douilles de guidage (4) étant rattachées les unes aux autres par l'intermédiaire des éléments de liaison (8) qui, dans la projection axiale, dépassent radialement des zones de guidage, caractérisée en ce que les zones de guidage sont constituées par des surfaces annulaires (5) prévues dans les deux zones d'extrémité axiales des douilles de guidage (4), dont le diamètre est supérieur au diamètre de la section des douilles de guidage (4) placée entre lesdites surfaces annulaires ainsi que de la tête (3) des clous.

2. Bande de clous selon la revendication 1, caractérisée en ce que les éléments de liaison sont conformés sous la forme de barrettes (8) qui s'étendent sur au moins la moitié de la longueur des douilles de guidage (4).

3. Bande de clous selon la revendication 2, caractérisée en ce que, dans la section médiane entre respectivement deux douilles de guidage (4) voisines, les barrettes (8) présentent un affaiblissement de leur section transversale réalisé par un évidement en V (9) prévu sur au moins l'une des faces frontales desdites barrettes (8).

4. Bande de clous selon l'une des revendications 1 à 3, caractérisée en ce que les surfaces annulaires (5) présentent une hauteur qui correspond respectivement à 0,1 à 0,3 fois leur diamètre.

EP 0 237 476 B1

Fig.1

Fig.3

Fig.4

Fig.2